# EUROPÄISCHE PATENTSCHRIFT

(11) **EP 1 745 983 B1**
(45) Veröffentlichungstag und Bekanntmachung des Hinweises auf die Patenterteilung: **20.01.2010**
(21) Anmeldenummer: 06008252.6
(22) Anmeldetag: 21.04.2006
(51) Int. Cl.: B60R 13/02

(54) **Innenverkleidung für ein Kraftfahrzeug**
Interior trim for an automobile
Cache intèrieure pour véhicule automobile

(30) Priorität: 19.07.2005 DE 102005033656
(43) Veröffentlichungstag der Anmeldung: 24.01.2007
(73) Patentinhaber: Dr. Ing. h.c. F. Porsche Aktiengesellschaft, 70435 Stuttgart (DE)
(72) Erfinder: Benkler, Olaf, 75242 Neuhausen/Schellbronn (DE)

(56) Entgegenhaltungen:
- EP-A- 1 369 304
- EP-A- 1 384 628
- DE-A1- 10 340 896
- DE-B3- 10 254 349
- DE-C1- 19 521 593
- PATENT ABSTRACTS OF JAPAN Bd. 008, Nr. 026 (M-273), 3. Februar 1984 (1984-02-03) & JP 58 183330 A (NIHON SEKISOO KOGYO KK), 26. Oktober 1983 (1983-10-26)

## Beschreibung

Bei der Erfindung wird ausgegangen von einer Innenverkleidung für ein Kraftfahrzeug, gemäß Oberbegriff des Anspruchs 1.

Eine gattungsbildende Innenverkleidung ist aus der DE 103 40 896 A1 bekannt, wonach ein Innenverkleidungselement für den Innenraum eines Kraftfahrzeugs an einem Teil der Fahrzeugkarosserie bzw. des Rohbaus befestigt wird. Definitionsgemäß ist somit eine Seite des Innenverkleidungselements die Rohbauseite und dem Karosserieteil zugewandt. Eine Sichtseite des Innenverkleidungsteils zeigt zum Fahrzeuginnenraum. Zwischen Karosserieelement und der Rohbauseite ist ein Geräuschdämpfungselement aus EPDM angeordnet. Dieses Geräuschdämpfungselement ist örtlich als Klammer ausgeführt und hält gleichzeitig das Innenverkleidungsteil an dem Karosserieteil.

Eine ähnliche Ausgestaltung eines Innenverkleidungsteils mit einem Befestigungselement aus EPDM ist der EP 1 369 304 A1 zu entnehmen. Das Befestigungselement ist hier als so genannter Pilzzapfen ausgeführt, der in eine Öffnung in der Karosserie eingreift, wodurch das Innenverkleidungsteil an der Karosserie gehalten wird.

Eine Innenverkleidung mit zumindest einem Innenverkleidungselement für den Innenraum eines Kraftfahrzeug ist aus der DE 102 54 349 B3 bekannt. Dieses Innenverkleidungsteil ist als starres Formteil ausgeführt, welches eine Sichtseite sowie eine Rohbauseite aufweist, wobei die Sichtseite dem Fahrzeuginnenraum und die Rohbauseite dem Rohbau des Fahrzeugs zugewandt liegt. An diesem Formteil ist als Geräuschdämpfungselement ein Elastomer auf der Rohbauseite angebracht. Hergestellt wird das Formteil mit dem Geräuschdämpfungselement dadurch, dass in eine Gießform zunächst das Material für das Formteil eingebracht und anschließend das Material für das Geräuschdämpfungselement in die Gießform eingespritzt wird. Derartige, so genannte Zwei-Komponenten-Verfahren sind jedoch aufwendig.

Es ist daher Aufgabe der Erfindung, eine gattungsgemäße Innenverkleidung für ein Kraftfahrzeug anzugeben, die hinsichtlich einer Geräuschentwicklung optimiert ist.

Gelöst wird diese Aufgabe mit einer Innenverkleidung für ein Kraftfahrzeug, die die in Anspruch 1 genannten Merkmale aufweist. Ausgestaltungen der Erfindung sind in den Unteransprüchen angegeben.

Die Erfindung zeichnet sich dadurch aus, dass das Geräuschdämpfungselement als separates, örtlich an dem ersten Innenverkleidungsteil angebrachtes EPDM-Teil ausgeführt ist, so dass es sich an dem zweiten Innenverkleidungsteil in einem Überlappungs- und/oder Verbindungsbereich abstützen kann, wodurch eine Geräuschentwicklung während der Fahrt vermieden werden kann. Die mit der Erfindung hauptsächlich erzielten Vorteile sind in einer Austauschbarkeit des bzw. der Geräuschdämpfungselemente im Reparaturfall zu sehen. Außerdem weist ein Geräuschdämpfungselement aus EPDM eine höhere Lebensdauer als die bereits im Stand der Technik bekannten Einlagen aus Filz oder Schaumstoff auf. Außerdem sind das Innenverkleidungsteil und das Geräuschdämpfungselement günstig herstellbar.

Nach einer in Anspruch 2 angegebenen Weiterbildung der Erfindung ist vorteilhaft, dass das Geräuschdämpfungselement sicher und fest an seiner vorgegebenen Stelle verbleibt und nicht - wie bei aufgeklebten Geräuschdämpfungselementen - verrutschen kann.

Nach einem Ausführungsbeispiel ist das Geräuschdämpfungselement als Pilzzapfen ausgeführt, der auf einfache Art und Weise in das Formteil einknüpfbar ist. Mit seinem Pilzhut kann der Pilzzapfen auf der Rohbauseite zu liegen kommen, wodurch der Pilzhut selbst das Geräuschdämpfungselement bildet und das Formteil gegenüber dem Rohbau oder gegebenenfalls gegenüber einem weiteren Innenverkleidungsteil abstützt.

In einer Weiterbildung der Erfindung weist das Innenverkleidungsteil an seiner Rohbauseite einen Steg auf, dessen freies Ende mit dem Geräuschdämpfungselement versehen ist. Dieses Geräuschdämpfungselement kann vorzugsweise als aufgesetzter Keder ausgeführt sein.

Die Erfindung wird nachfolgend anhand eines Ausführungsbeispiels mit Bezug auf die Zeichnung näher erläutert. Die Fig. 1 bis 6 zeigen im Schnitt jeweils ein Innenverkleidungsteil mit einem Geräuschdämpfungselement, wobei lediglich die in Fig. 2 und 3 gezeigten Ausführungsbeispiele von dem Patentanspruch 1 erfasst ist.

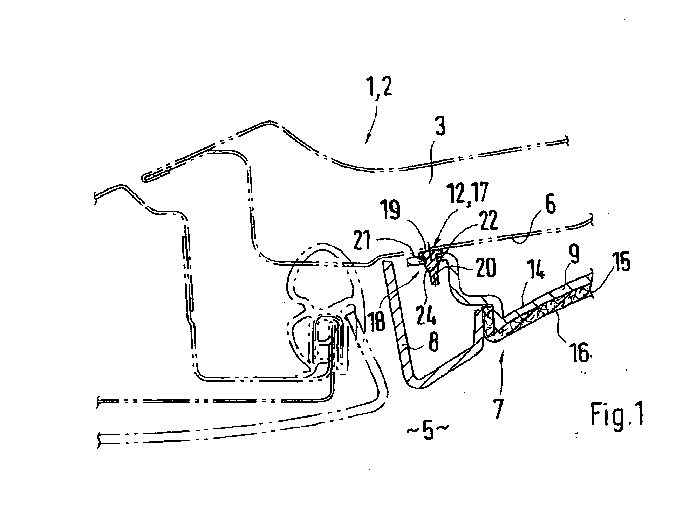

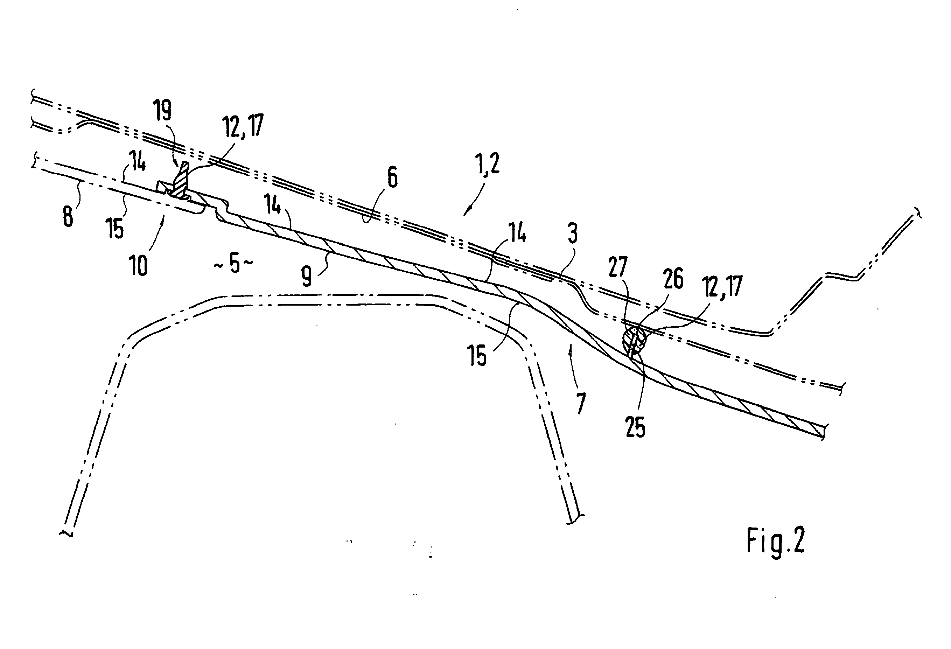

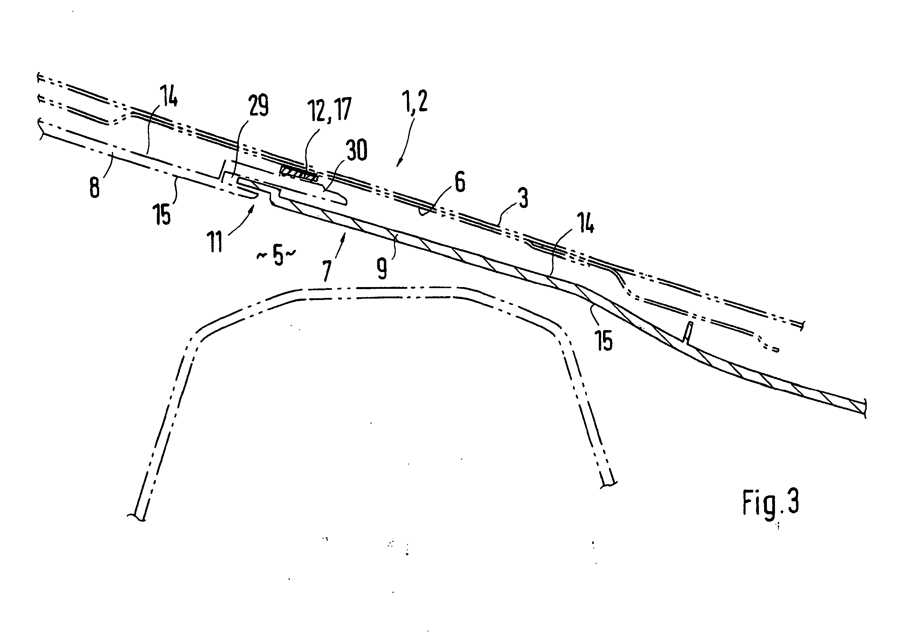

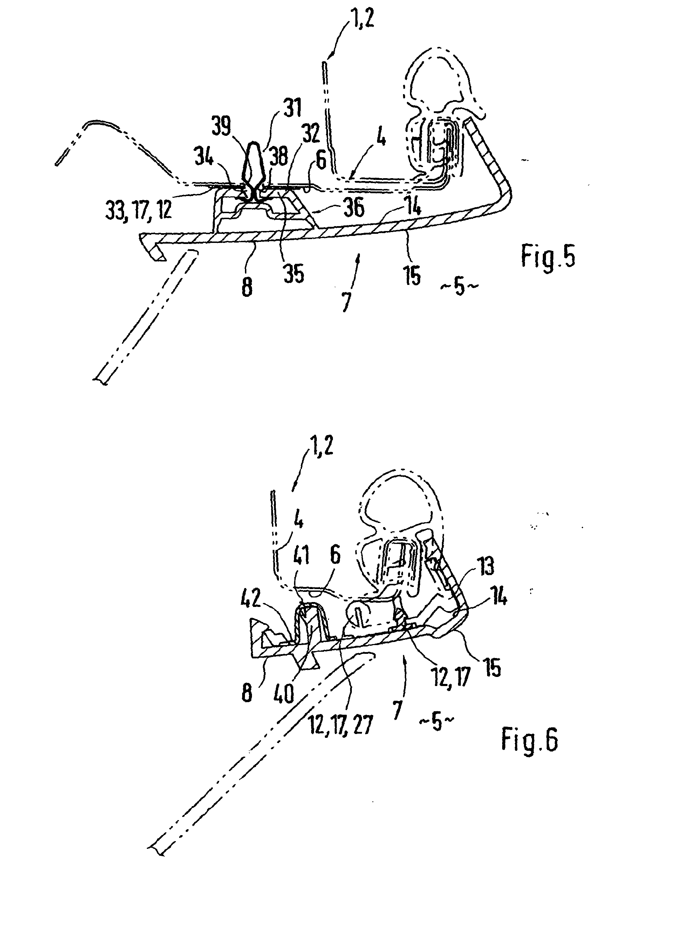

Die Fig. 1 bis 6 zeigen von einem hier nicht näher dargestellten Kraftfahrzeug einen Abschnitt 1 eines Rohbaus 2 bzw. einen Abschnitt eines Karosserieteils, welches in den Fig. 1 bis 4 eine Heckklappe 3 bildet. In den Fig. 5 und 6 ist der Abschnitt 1 des Rohbaus 2 ein eine Heckklappenöffnung in dem Rohbau 2 umgebender Randbereich 4. Der Abschnitt 1 des Rohbaus 2 weist eine einem Fahrzeuginnenraum 5 zugewandte Verkleidungsseite 6 auf, die von einer Innenverkleidung 7 verblendet bzw. abgedeckt wird. Die Innenverkleidung 7 besitzt zumindest ein Innenverkleidungsteil 8 oder - wie die Fig. 2 bis 4 zeigen - erste und zweite oder mehr Innenverkleidungsteile 8 und 9, die benachbart zueinander liegen und insbesondere sich in einem Überlappungsbereich 10 überlappen (Fig. 2) oder in einem Verbindungsbereich 11 (Fig. 3) ineinander gesteckt sind.

Um eine durch eine Relativbewegung zwischen Rohbau 2 und Innenverkleidung 7 verursachte Geräuschentwicklung während der Fahrt des Kraftfahrzeugs zu vermeiden, ist der Innenverkleidung 7 zumindest ein Geräuschdämpfungselement 12 zugeordnet, welches die Innenverkleidung 7 gegenüber dem Rohbau an der Verkleidungsseite 6 abstützt oder das Innenverkleidungsteil 9 gegenüber dem anderen Innenverkleidungsteil 8 abstützt. Wie Fig. 6 zeigt, kann die Innenverkleidung 7 ein Trägerteil 13 aufweisen, welches zwischen der Verkleidungsseite 6 des Rohbaus 2 und der Innenverkleidung 7 angeordnet ist. Zwischen diesem Trägerteil 13 und dem Verkleidungsteil 8 kann ein Geräuschdämpfungselement 12 angeordnet sein. Das bzw. die Geräuschdämpfungselemente 12 liegen mithin an einer Rohbauseite 14 des als starres Formteil ausgeführten Innenverkleidungsteils 8 bzw. 9. Die Rohbauseite 14 ist definitionsgemäß der Verkleidungsseite 6 des Rohbaus 2 zugewandt. Der Rohbauseite 14 gegenüberliegend weist das Innenverkleidungsteil 8 bzw. 9 eine dem Innenraum 5 zugewandte Sichtseite 15 auf, die gegebenenfalls mit einem Bezug 16 oder einem Dekor versehen sein kann. Das bzw. die Geräuschdämpfungselemente 12 sind der Rohbauseite 14 zugeordnet bzw. daran befestigt. Die Geräuschdämpfungselemente 12 in den weiter unten erläuterten verschiedenen Ausführungsbeispielen in den Fig. 1 bis 6 sind sämtlich als separate, also unabhängig von dem Innenverkleidungsteil 8 bzw. 9 hergestellte Teile ausgeführt sowie örtlich, also nicht flächendeckend oder großflächig, an dem Innenverkleidungsteil 8 bzw. 9 angebracht und aus einem EPDM-Werkstoff als EPDM-Teil 17 ausgeführt, wobei die Abkürzung EPDM für Ethylen-Propylen-Dien-Monomer steht.

Anhand der Fig. 1 bis 6 werden die unterschiedlichen Ausführungsformen von Geräuschdämpfungselementen 12 bzw. EPDM-Teilen 17 näher erläutert. In Fig. 1 ist das Geräuschdämpfungselement 12 durch Formschluss mit dem Formteil, also dem Innenverkleidungsteil 9 verbunden und vorzugsweise als Pilzzapfen 18 ausgeführt, dessen Pilzhut 19 auf der Rohbauseite 14 zu liegen kommt und dessen Pilzschaft 20 einen Durchbruch 21 in dem Innenverkleidungsteil 9 durchsetzt. Für die formschlüssige Fixierung des Pilzzapfens 18 weist der Pilzschaft 20 benachbart zum Pilzhut 19 eine Einschnürung 22 auf, in der der Randbereich des Durchbruchs 21 zu liegen kommt, welcher Randbereich 23 in den Pilzschaft 20 eingreift. Um den Pilzzapfen 18 in das Innenverkleidungsteil 9 einfacher einknüpfen zu können, ist der Pilzschaft 20 mit einem Konus 24 versehen, der sich in Richtung zur Einschnürung 22 hin erweitert. Von dem benachbart liegenden Innenverkleidungsteil 8 wird der Pilzzapfen 18 im Überlappungsbereich 10 abgedeckt.

Bei dem in Fig. 2 gezeigten Ausführungsbeispiel ist der Pilzzapfen 18 so angeordnet, dass sein Pilzhut 19 an der Rohbauseite 14 des Innenverkleidungsteils 8 anliegt, also das Innenverkleidungsteil 9 gegenüber dem Innenverkleidungsteil 8 abstützt. Der Pilzzapfen 18 in Fig. 2 ist ansonsten identisch zum Pilzzapfen 18 in Fig. 1 ausgebildet, so dass auf dessen Beschreibung verwiesen wird. Fig. 2 zeigt noch ein weiteres Ausführungsbeispiel eines Geräuschdämpfungselements 12 bzw. eines EPDM-Teils 17, welches auf einen von der Rohbauseite 14 entspringenden Steg 25 aufgesetzt ist. Vorzugsweise ist der Steg 25 einstückig mit dem Innenverkleidungsteil 9 ausgeführt. Auf sein freies Ende 26 ist das wulstförmige, als Keder 27 ausgeführte EPDM-Teil 17 aufgesteckt und gegebenenfalls mit dem Steg 25 verbunden.

In Fig. 3 ist ein weiteres Ausführungsbeispiel eines Geräuschdämpfungselements 12 bzw. EPDM-Teils 17 gezeigt, welches als selbstklebendes Materialplättchen oder als selbstklebender Materialstreifen an der Rohbauseite 14 des Innenverkleidungsteils 8 bzw. 9 befestigt ist. Vorzugsweise ist das Materialplättchen 28 an der Rohbauseite 14 im Bereich des Verbindungsbereichs 11 zwischen den beiden Innenverkleidungsteilen 8 und 9 angebracht. Der Verbindungsbereich 11 umfasst eine an der Rohbauseite 14 des Innenverkleidungsteils 8 liegende Tasche 29, die von einem etwa L-förmigen Schenkel 30 und dem Innenverkleidungsteil 8 gebildet wird. In die Tasche 29 ist der Randabschnitt des benachbarten Innenverkleidungsteils 9 eingesteckt. Das Geräuschdämpfungselement 12 ist unmittelbar im Verbindungsbereich 11 hinter der Tasche 29 und insbesondere an dem L-förmigen Schenkel 30 angeordnet.

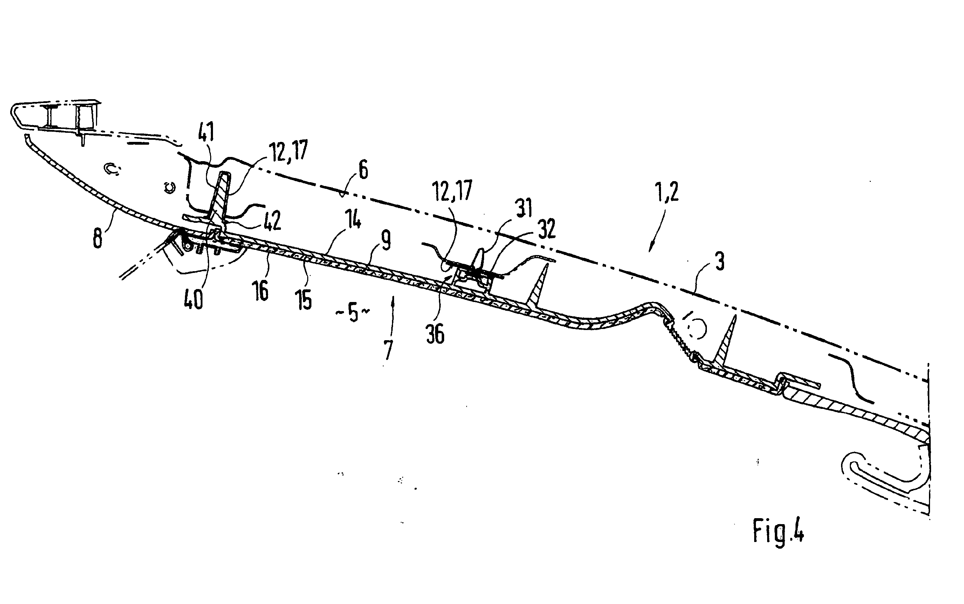

Anhand der Fig. 4 und 5 wird ein weiteres Ausführungsbeispiel des Geräuschdämpfungselements 12 bzw. EPDM-Teils 17 beschrieben. An der Rohbauseite 14 des Innenverkleidungsteils ist ein Befestigungsmittel 31 für das Innenverkleidungsteil 8 bzw. 9 an dem Rohbau 2 befestigt. Dabei überragt das Befestigungsmittel 31 eine Anlagefläche 32, die als Erhebung auf der Rohbauseite 14 ausgeführt ist. Auf der Anlagefläche 32 ist in Form eines Materialplättchens 33 das Geräuschdämpfungselement bzw. das EPDM-Teil 17 angeordnet. Es weist mittig einen Durchbruch 34 auf, der von dem Befestigungsmittel 31 durchsetzt ist. Die Anlagefläche 32 liegt als Erhebung mit Abstand zu der Rohbauseite 14 und wird gebildet von einem Dach 35 eines Blocks 36, der vorzugsweise hohl ausgebildet ist. Das Dach 35 weist - wie das Materialplättchen 33 - einen Durchbruch 37 auf, der von dem Befestigungsmittel 31 durchsetzt ist. Das Befestigungsmittel 31 wird also an der Rückseite der Anlagefläche 32 gehalten. In bevorzugter Ausführungsform ist das Befestigungsmittel 31 als Federklammer ausgeführt, die einen Durchbruch 39 im Rohbau 2 federnd hintergreift und so das Innenverkleidungsteil 8 bzw. 9 an dem Rohbau 2 hält.

Wie aus den Fig. 4 und 6 weiter hervorgeht, kann an der Rohbauseite 14 des Innenverkleidungsteils 8 bzw. 9 ein Positionierzapfen 40 ausgehen, der in eine entsprechende Positionierungsöffnung 41 im Rohbau 2 eingreift oder, wie in Fig. 6 zu sehen, als Abstandhalter zum Rohbau 2 dienen kann. Der Positionierzapfen 40 wird mit einem als Kappe 41 ausgeführten Geräuschdämpfungselement 12 bzw. EPDM-Teil 17 ausgestattet. An ihrer Öffnung weist die Kappe 41 einen nach außen gerichteten Kragen 42 auf, der beim Ausführungsbeispiel nach Fig. 4 zwischen der Rohbauseite 14 und dem Rohbau 2 zu liegen kommt.

## Patentansprüche

1. Innenverkleidung (7) für ein Kraftfahrzeug, mit zumindest einem Innenverkleidungsteil (8, 9), das als starres Formteil ausgeführt ist, eine Sichtseite (15) sowie eine Rohbauseite (14) aufweist und mit zumindest einem Geräuschdämpfungselement (12) aus einem Elastomer zumindest an der Rohbauseite (14) ausgestattet ist, wobei das Geräuschdämpfungselement (12) als zumindest ein separates, örtlich an dem Innenverkleidungsteil (8,9) angebrachtes EPDM-Teil (17) ausgeführt ist, **dadurch gekennzeichnet, dass** das Geräuschdämpfungselement (12) ein erstes Innenverkleidungsteil (8) gegenüber einem zweiten Innenverkleidungsteil (9) in einem Überlappungsbereich (10) und/oder einem Verbindungsbereich (11) abstützt.

2. Innenverkleidung nach Anspruch 1, **dadurch gekennzeichnet, dass** das Geräuschdämpfungselement (12) mit dem Formteil formschlüssig verbunden, insbesondere in das Formteil eingeknüpft ist.

3. Innenverkleidung nach Anspruch 2, **dadurch gekennzeichnet, dass** das Geräuschdämpfungselement (12) als Pilzzapfen (18) ausgeführt ist, wobei dessen Pilzschaft (20) in das Formteil eingeknüpft ist.

4. Innenverkleidung nach Anspruch 3, **dadurch gekennzeichnet**, der Pilzzapfen (18) so in das Formteil eingeknüpft ist, dass sein Pilzhut (19) auf der Sichtseite (15) oder der Rohbauseite (14) zu liegen kommt.

5. Innenverkleidung nach Anspruch 4, **dadurch gekennzeichnet, dass** auf dem auf der Sichtseite (15) liegenden Pilzhut (20) das zweite Innenverkleidungsteil (8, 9) mit seiner Rohbauseite (14) zu liegen kommt.

6. Innenverkleidung nach Anspruch 1, **dadurch gekennzeichnet, dass** von der Rohbauseite (14) als Abstandhalter für das Innenverkleidungsteil (8, 9) gegenüber dem Rohbau (2) ein Steg (25) entspringt, der an seinem freien Ende (26) mit einem weiteren Geräuschdämpfungselement (12) versehen ist.

7. Innenverkleidung nach Anspruch 6, **dadurch gekennzeichnet, dass** das Geräuschdämpfungselement (12) als auf den Steg (25) aufgesetzter Keder (27) ausgeführt ist.

## Claims

1. Interior trim (7) for an automobile, with at least one interior trim part (8, 9) which is designed as a rigid moulded part, has a visible side (15) and a body shell side (14) and is equipped at least on the body shell side (14) with at least one noise-damping element (12) made from an elastomer, wherein the noise-damping element (12) is designed as at least one separate EPDM part (17) which is attached locally to the interior trim part (8, 9), **characterized in that** the noise-damping element (12) supports a first interior trim part (8) in relation to a second interior trim part (9) in an overlapping region (10) and/or a connecting region (11).

2. Interior trim according to Claim 1, **characterized in that** the noise-damping element (12) is connected in a form-fitting manner to the moulded part, and in particular is fitted into the moulded part.

3. Interior trim according to Claim 2, **characterized in that** the noise-damping element (12) is designed as a mushroom pin (18), the mushroom stem (20) of which is fitted into the moulded part.

4. Interior trim according to Claim 3, **characterized in that** the mushroom pin (18) is fitted into the moulded part in such a manner that the mushroom cap (19) thereof comes to lie on the visible side (15) or on the body shell side (14).

5. Interior trim according to Claim 4, **characterized in that** the second interior trim part (8, 9) comes to lie by means of the body shell side (14) thereof on the mushroom cap (20) which is located on the visible side (15).

6. Interior trim according to Claim 1, **characterized in that** a web (25) rises from the body shell side (14) as a spacer for the interior trim part (8, 9) in relation to the body shell (2), said web being provided, at the free end (26) thereof, with a further noise-damping element (12).

7. Interior trim according to Claim 6, **characterized in that** the noise-damping element (12) is designed as a weatherstrip (27) which is placed onto the web (25).

## Revendications

1. Habillage intérieur (7) pour véhicule automobile, qui présente au moins une pièce (8, 9) d'habillage intérieur réalisée sous la forme d'une pièce moulée rigide qui présente un côté visible (15) ainsi qu'un côté brut (14) et dont au moins le côté brut (14) est doté d'au moins un élément (12) d'atténuation du bruit en élastomère, l'élément (12) d'atténuation du bruit étant réalisé sous la forme d'au moins une pièce (17) en EPDM séparée placée localement sur la pièce (8, 9) d'habillage intérieur,
**caractérisé en ce que**
l'élément (12) d'atténuation du bruit soutient une première pièce (8) d'habillage intérieur sur une deuxième pièce (9) d'habillage intérieur dans une zone de superposition (10) et/ou une zone de raccordement (11).

2. Habillage intérieur selon la revendication 1, **caractérisé en ce que** l'élément (12) d'atténuation du bruit est relié en correspondance géométrique à la pièce moulée et est en particulier intégré dans la pièce moulée.

3. Habillage intérieur selon la revendication 2, **caractérisé en ce que** l'élément (12) d'atténuation du bruit est configuré comme tourillon (18) en champignon dont le pied (20) est intégré dans la pièce moulée.

4. Habillage intérieur selon la revendication 3, **caractérisé en ce que** le tourillon (18) en champignon est intégré dans la pièce moulée de telle sorte que le chapeau (19) du champignon vient se placer sur le côté visible (15) ou sur le côté brut (14).

5. Habillage intérieur selon la revendication 4,
**caractérisé en ce que** la deuxième pièce (8, 9) d'habillage intérieur vient se placer par son côté brut (14) sur le chapeau (20) du champignon placé sur le côté visible (15).

6. Habillage intérieur selon la revendication 1, **caractérisé en ce qu'**une nervure (25) déborde du côté brut (14) pour servir d'écarteur à la pièce (8, 9) d'habillage intérieur par rapport au côté brut (2) et est dotée à son extrémité libre (26) d'un autre élément (12) d'atténuation du bruit.

7. Habillage intérieur selon la revendication 6, **caractérisé en ce que** l'élément (12) d'atténuation du bruit est réalisé sous la forme d'un bourrelet (27) placé sur la nervure (25).
